# EUROPEAN PATENT APPLICATION

(11) **EP 4 841 297 A1**
(43) Date of publication of application: **18.11.2026**
(21) Application number: 25218664.8
(22) Date of filing: 26.11.2025
(51) Int. Cl.: G01S 7/41, F41B 15/00, G01S 13/02, G01S 13/04, G01S 13/88

(54) **METHOD AND DEVICE FOR DETECTING AND NEUTRALIZING LOW ALTITUDE SELF-CONTROLLED UNMANNED AERIAL VEHICLES**

(30) Priority: 15.05.2025 DE 102025118824
(71) Applicant: Antselevich, Mikhail Aleksandrovich, 847165 Beer Sheva (IL)
(72) Inventor: Antselevich, Mikhail Aleksandrovich, 847165 Beer Sheva (IL)
(74) Representative: Harrison IP Limited

(57) **Abstract**

The invention relates to the detection of aerial targets, low-altitude unmanned aerial vehicles (UAVs), in particular drones, including those without external control.

The technical result of the invention is an increase in the detection range of UAVs, including those without external control, using multi-frequency nonlinear radar and recording of combination frequencies of the second and third order, parametric location (electromagnetic, acoustic, etc.) and the creation of conditions for UAV neutralization.

The detected UAV is affected by a powerful electromagnetic pulse at the optimal frequency in order to disrupt the functioning of its internal systems.

## Description

### Field of technology to which the invention relates

The invention relates to the detection of aerial targets, in particular low-altitude unmanned aerial vehicles (UAVs), and can be used in the creation of technical means for protecting important ground objects.

### Prerequisites for the creation of an invention

It is known that the radar method is successfully used to detect air targets. However, with the advent of unmanned aerial vehicles (UAVs), in particular drones, the aviation situation has changed dramatically. UAVs have actually become a new type of weapon.

To detect and neutralize drones, external radio frequency impact on receiving and transmitting devices, drone control lines and spatial positioning elements is currently used. For this purpose, their radio suppression is carried out using technical means of electronic warfare (EW), and radio interception of control and disabling of GPS receivers are also used.

One of the main factors limiting the effectiveness of radar methods for detecting unmanned aerial vehicles (UAVs) is the high level of interference created by the surrounding background.

At the same time, in the field of unmanned technologies, drone control using radio links is gradually being reduced, up to the point of completely abandoning their use. The new class of self-controlled UAVs arises. Control systems based on artificial intelligence are rapidly developing. Over time, the use of global navigation satellite systems (GPS) for spatial orientation of UAVs may also disappear. In the absence of receiving devices and, accordingly, external control lines, the use of traditional means of electronic suppression becomes useless. This, in turn, actualizes the need to develop alternative methods for detecting and neutralizing UAVs.

### State of the art

One of such methods is the nonlinear radar method. This is due to the fact that the spectrum of the reflected signal in the presence of nonlinear elements in the aerial target differs significantly from the spectrum of the probing signal. Unlike linear radar, nonlinear radar has expanded capabilities for detecting and recognizing objects. Analysis of such spectral distortions allows us to draw conclusions about the nature of the detected object. Additionally, traditional methods of radar recognition can be used, including polarization, phase and others.

***The method of detecting objects using nonlinear radar is the closest to the claimed invention,*** in which the detected object (in particular, a UAV) is exposed to an electromagnetic field in the microwave range, and reception is carried out at the frequency of the second harmonic of the probing signal.

Low-frequency semiconductor elements and point steel pressure contacts usually have nonlinear radiophysical properties. Such components are typical for the internal structures of UAVs, as well as for radio-controlled and autonomous explosive devices that can be used as a target load.

### Disclosure of the essence of the invention

The characteristics of the reflected signal harmonics depend on many factors, including the type of volt-ampere characteristics of nonlinear elements, their frequency properties, spatial arrangement, and the presence of reactive loads.

The main part of the energy reflected from an object with nonlinear electrophysical properties is concentrated at the frequency of the probing signal. Only an insignificant part of this energy is transferred to the harmonic frequencies. The energy reflected at the harmonic frequency is characterized by the value of the effective scattering area at the harmonic σ*_{N}*, which is called the nonlinear effective scattering surface (NESR).

By analogy with ESR, it can be considered that NESR is the ratio of the radiation power at the harmonic frequency of a certain number, which creates the same power flux density at the location of the receiving device as the real search object, to the power flux density of the real field falling on the search object.

Numerous experiments conducted in the 1970s by various researchers [1, 2], using small-sized objects, showed that the following dependencies exist between the falling and reflected fields of the decimeter range in free space: ${P}_{N} = {σ}_{n} {P}_{fal} , {P}_{N} = {σ}_{N \left(1\right)} {{P}_{fal}}^{m} , σ = {σ}_{N \left(1\right)} {{P}_{fal}}^{m - 1}$ (1-3)
where *P_{N}* - reradiated power at the harmonic frequency;
*σ* - nonlinear ESR (NESR); *σ*_{*N* (1)} - normalized NESR, numerically equal *σ_{N}* at *P_{fal} =* 1 W/*m*², has a dimension *m*²*^{m}W*^{1*-m*}; m - a dimensionless indicator determined by the harmonic number and the nature of the search object.

It has been experimentally established that the NESR of most small-sized objects containing not fully shielded electronic devices in their design (non-contact and electronic-contact sensors, IP RLU explosion, etc.) is 10⁻⁷ - 10⁻¹¹ *m*² at the second harmonic and 10⁻¹⁰ - 10⁻¹² *m*² at the third harmonic - at *P_{fal}* = 1 *W*/*m*²*.*

It is important that nonlinear radar, unlike conventional, i.e. linear, provides more opportunities for recognizing search objects. This is explained by the fact that based on the analysis of the spectrum of the reflected signal, which differs significantly from the spectrum of the primary signal, it is possible to judge the nature of the detected object. In this case, it is possible to additionally use conventional methods of radar recognition: polarization and phase, etc.

To detect nonlinear objects, various effects similar to those known from the theory of nonlinear electric circuits can be used: excitation of harmonics and combination frequencies, modulation and demodulation, cross-modulation, etc. The choice of one or another nonlinear effect for use in a search system is determined by the type of objects being detected, the expected conditions of their installation, the required range and speed of search, etc.

***The claimed invention proposes to use multi-frequency probing signals, the formation of which can be carried out in various ways.***

Let us note the advantages, in particular, of the dual-frequency radar method compared to the single-frequency one:
- there is no need to eliminate the generators' own harmonics, which simplifies the technical implementation of the method;
- effective recognition of UAVs due to a wider spectrum of reflected microwave signals;
- significantly lower interference impact of the NRS carrier (when installed on a mobile ground carrier)

The practical implementation of the multi-frequency mode is determined, first of all, by the need to create broadband microwave devices: powerful pulse generators, highly directional antennas and sensitive receivers. The reception of the reflected signal is carried out at (y 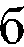 pa 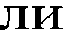 fixed) combination frequencies of the second and third orders.

An important role in multi-frequency radar is played by resonance phenomena during the formation of a secondary signal from a nonlinear search object.

With dual-frequency irradiation, nonlinear objects can be detected by recording combination frequencies in the spectrum of the reflected signal. In this case, signals from electronic devices, as a rule, have the greatest magnitude at frequencies *f*₁ ± *f*₂*.* These signals are caused mainly by the square term of the volt-ampere characteristic of the semiconductor junction. The signals caused by the presence of metal contacts are maximal at frequencies 2*f*₁ - *f*₂ and 2*f*₂ - *f*₁*.*

This is explained by the "cubic" nonlinearity of the volt-ampere characteristic of the oxidized metal contact. The range of a dual-frequency nonlinear radar in free space can be estimated by the formula: ${R}_{max} = \sqrt[2 \left({q}_{1}+{q}_{2}+1\right)]{\frac{{P}_{{u}_{1}}^{{q}_{1}} {P}_{{u}_{2}}^{{q}_{2}} {G}_{{u}_{1}}^{{q}_{1}} {G}_{{u}_{2}}^{{q}_{2}} {σ}_{cf \left(1\right)} {A}_{n}}{{\left(4π\right)}^{{q}_{1} + {q}_{2} + 1} {P}_{rec min}}}$ (4) Where *P*_{*u*1}*, P*_{*u*2} - transmitter power (in pulse) at frequencies *f*₁ and *f*₂, *m*²;
*G*_{*u*1}*, G*_{*u*2} - transmitting antenna gain factors;
*σ*_{*cf*(1)}*-* normalized nonlinear ESR of the search object at the combination frequency (at power flux densities of probing signals *P*₁ *= P₂* = 1 *W · m*⁻²);
*A_{A}* - effective area of the receiving antenna at the harmonic;
*q*₁ *, q*₂ - dimensionless indicators of nonlinearity of the search object;
*P_{rec min}* -microwave receiver sensitivity.

Experiments have shown that at power flow densities *P*₁, *P*₂ less than 2-3 W· *m*⁻²dimensionless indicators in the first approximation are equal to: *q*₁ ≈ 2, *q*₂ ≈ 1 on the received frequency *f*₁ *+ f₂.* The values of nonlinear ESR of small-sized objects are 10⁻⁶ - 10⁻¹² *m*² (at *P*₁ = *P*₂ = 1 W/*m*⁻²). Dimension *σ*_{*cf*(1)} has the form ${M}^{2 {q}_{1} + 2 {q}_{2}} {Bm}^{1 - {q}_{1} - {q}_{2}} .$

It should be noted that the requirements for the inherent nonlinearity of the microwave receiving and transmitting equipment are significantly lower than when implementing the known method of nonlinear radar (on harmonics, i.e. the single-frequency method).

For comparison, we can use the formula for the range of a single-frequency harmonic NRS: ${R}_{max} = = \sqrt[{2}_{m} + 2]{\frac{{P}_{u}^{m} {G}_{u}^{m} {σ}_{n \left(1\right)} {A}_{n}}{{\left(4π\right)}^{m + 1} {P}_{rec min}}}$ (5) This formula is determined by the dependencies (1) ÷ (3).

From expression (4) it is evident that, unlike a conventional (linear) radar, the range of a dual-frequency NRS increases faster with an increase in transmitter power than with an increase in receiver sensitivity. In practice, this will require the use of powerful probing pulses with a large duty cycle.

The positive effect of using multi-frequency operating mode in nonlinear radar is presented in Table 1.

**Table 1.**

| Positive effect (compared to single frequency mode) | A physical process caused by a multi-frequency operating mode |
|---|---|
| Increase in detection range of nonlinear objects: 2-2.5 times in free space; 1.6-1.8 times near the ground surface | Increase in NESR by 15-25 dB, with frequency tuning of 15-20% due to resonance phenomena during re-radiation of the microwave signal |
| Increasing the probability of detecting search objects with a jagged backscatter pattern (BSP) | Changing the BSP of a nonlinear object |
| Increasing the detection range of objects with electronic devices that have shielding metal housings | Resonance phenomena in holes and cracks of a metal case |
| Recognition of the detected nonlinear object | A set of stable resonance effects in linear and nonlinear elements of the search object during re-radiation of a microwave signal |
| Increasing the detection range of objects located behind screening obstacles (reinforced concrete structures, uneven ground, etc.) | Interference and diffraction phenomena at the upper edge of an obstacle (the effect of "amplification" of the field by an obstacle) |
| Reducing the requirements for the level of own harmonics of the microwave transmitter of the NRS in dual-frequency mode of operation | Use of fixed combination frequencies in the spectrum of the reflected signal (instead of harmonics) when receiving |

It also follows from expression (4) that the influence of the power of each of the two NRS transmitters on its range depends on the received combination frequency. Therefore, the question of the optimal ratio of the powers of these transmitters is very important, from the point of view of obtaining the maximum detection range. Let's assume that *P*_{*i*2} *= P_{iΣ} - P*_{*i*1}*.* At the same time *P_{iΣ}* - total specified pulse power of both NRS transmitters. Let *r_{det}* to be a function, and *P*_{*i*1}*-* is an argument, besides *G*_{*i*1} *= G*_{*i*2}. A necessary condition for the maximum *r_{det}* is the equality of the derivative to zero. $\frac{{dr}_{det}}{{dP}_{i 1}} = 0$

Having determined the derivatives for various *q*₁ and *q*₂ and equating them to zero, we obtain that the condition of the maximum detection range at frequency *f_{rec} = f*₁ *+ f₂* is: ${P}_{i 1} = {P}_{i 2} = 0 , 5 {P}_{iΣ} ,$ (6) and on frequency *f_{rec} =* 2*f*₁ - *f*₂ ${P}_{i 1} = 0 , 66 {P}_{iΣ} ,$ (7)

Comparison of expression (4) with expression (5), which determines the range of a single-frequency NRS, shows that if *G*_{*i*1} = *G*_{*i*2}*, P*_{*i*1} = *P*_{*i*2}, then at *Δf = f*₁ - *f*₂ → 0 and the equality of the NESR there are characteristic coincidences. For example, the range of a dual-frequency NRS when receiving on the sum frequency is equal to the range of a single-frequency NRS using the second harmonic for reception. At the same time, the range of a dual-frequency NRS at the frequency *f_{rec} =* 2*f*₁ - *f*₂ equal to the range of a single-frequency navigation radar at a frequency *f_{rec} =* 3*f*₁. Physically, this is explained by the fact that in the first case, when forming a secondary signal, the quadratic term of the volt-ampere characteristic of the nonlinear element of the search object is realized, and in the second case, its cubic term (with power approximation).

It is fair to note that the operating frequencies of the NRS are not explicitly included in expression (3.4), which estimates its range. However, the choice of frequencies *f*₁ and *f*₂ significantly affects this range. This is explained primarily by the fact that the nonlinear properties of metal contacts depend to a significant extent on frequency. For example, an expression has been obtained that determines the magnitude of the power at the frequency of mutual modulation that occurs when two harmonic signals with frequencies flow *f*₁ and *f*₂ through the aluminum contact of the radio circuit: $P = \frac{9}{32} {α}^{2} {P}_{m}^{3} \frac{{x}_{c 1}^{2} {x}_{c 2}^{4} {x}_{c}^{2}}{{R}_{0}^{2} {\left({r}_{s}+{r}_{i}\right)}^{4}}$ (8) where *α* - ratio characterizing the deviation from linearity;
*P* - total power passing through a metal contact, W;
*x*_{*c*1}*, x*_{*c*2}*, x* - capacitive reactances at frequencies *f*₁*, f*₂ and the frequency of mutual modulation 2*f*₂ - *f*₁*, Ohm;*
*R*₀ - active nonlinear contact resistance, Ohm;
*rₛ* - series contact resistance, Ohm;
*rᵢ* - load resistance.

From this expression it is clear that the power of the mutual modulation component is inversely proportional to the eighth power of the operating frequency (at *f*₁ ≈ *f*₂). Since the frequency of this component is approximately three times less than the frequency of the third harmonic, then, accordingly, the value of the NESR at this frequency will be significantly greater. In practice, the NESR of small-sized objects with pressure point contacts at a frequency *f_{rec}* = 2*f*_{1,2} - *f*_{*2*,1} (*at f*₁ ≈ *f*₂) 18-20 dB more than at *f_{rec} =* 3*f*₁. This confirms the feasibility of using a dual-frequency NRS instead of a single-frequency one to search for small-sized objects. Detection range of small-sized objects with electronic devices for a dual-frequency NRS (*f* 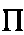 ₚ = *f*₁ + *f*₂) and single frequency (*f_{rec} =* 2*f*₁*)* approximately the same with equal transmitter power. However, the technical implementation of a dual-frequency NRS, especially when placed on a carrier, is much easier.

***Thus, the provisions and conclusions presented above largely confirm the advisability of using a dual-frequency radar instead of a single-frequency one for searching for small-sized aerial targets (UAVs).***

At the same time, the detection range of the search object, the possibility of its recognition, and clarification of technical characteristics are often required to a greater extent than the result that can be obtained even with the use of multi-frequency nonlinear radar.

In order to improve the unmasking features of search objects, in particular unmanned aerial vehicles (UAVs), the claimed invention (clause 1 of the formula) **proposes to use parametric effects.** Also proposed are options for implementing parametric location based on physical phenomena that in classical radio engineering practice are traditionally considered negative (the so-called "harmful" effects).

For example, mechanical vibrations of UAVs cause "target noise" that worsens the search characteristics of the radar. The cross-modulation effect is considered "harmful", creating mutual interference between adjacent communication channels [3, 4]. Excitation of electro-optical surveillance and target designation devices by laser emanation often leads to their "blinding" [5, 6]. Irradiation, even short-term, of electronic equipment with ionizing radiation (neutron, gamma) causes reversible and irreversible changes in its element base, primarily semiconductor components [7, 8]. However, control of all these effects, primarily due to the selection of optimal parameters (energy, time, frequency, etc.) of the exciting field allows them to be transformed from "harmful" into "useful" and used for the purpose of locating artificial objects.

Table 2 shows the characteristic parameters of the exciting fields.

In parametric location, the excitation signal "colors" the probing signal when it is reflected from the search object of artificial origin. "Coloring" the object consists of giving it characteristic amplitude, frequency-time and polarization features, which can then be detected in the receiver of the search system.

The parametric process of secondary signal formation can be either linear or nonlinear. The first case occurs, for example, when a microwave electromagnetic field is scattered by a vibrating search object - due to its additional irradiation by a powerful acoustic field. The second - when a microwave field is scattered by an excited nonlinear object on harmonics. Excitation of nonlinear elements of the search object (transistor and diode junctions, etc.) can be carried out by an electromagnetic field in a wide range of wavelengths ... LW, MW, SW ranges, ... which leads to a corresponding change in the NESR of the entire object.

It is logical to emphasize the presence of a significant number of possible combinations of probing and exciting physical fields. The choice of one or another combination should be made taking into account many factors: the availability of a priori information about the design features of the search objects, the characteristics of the environment, the required detection range, etc. With regard to the problem under consideration, the most promising should be considered combinations of various electromagnetic fields of the LF, HF, and microwave ranges. This is mainly due to their ability to penetrate through covering semiconducting media. The joint use of various combinations of probing and exciting fields in one search system is not excluded - in order to increase the reliability of detecting various small-sized objects.

**Table 2.**

| Type of excitation field | Excitable search elements of objects | Field intensity and duration of exposure | Possible areas of application of parametric effects |
|---|---|---|---|
| Microwave electromagnetic | Semiconductor radio components; point pressure metal contacts | *P_{fal}* > 0,1 *W*/*m²* | Remote detection of non-radiating electronic and explosive devices |
| | | *tᵢ* > 20 - 30*ns* | |
| | Flat metal contacts | *P_{fal}* > 100 - 200 *W*/*m*² | Remote detection of complex structural elements inside the UAV body and explosive devices |
| | | *tᵢ* > 5 - 10*ns* (plasma breakdown) | |
| LF magnetic (quasi-stationary) | Magnetic fuses and target sensors; ferromagnetic explosive device housings | H >0,1 - 1 A/m | Non-contact detection of shielded electronic devices, detection of explosive devices against interference from metal objects |
| | | *tᵢ* > 1 - 10*ms* | |
| Laser (UV, visible, IR) | Electro-optical devices (IR target sensors) | *P_{fal}* > 10⁻³ - 10⁻² *W*/*m*² | Remote recognition of passive image intensifiers, including special video cameras |
| | | *tᵢ >* 1 - 10*ms* | |
| Acoustic | Microphone target sensors; spring-loaded devices in drone design | *P_{fal}* > 1 - 10 *W*/*m*² | Remote detection of p-n junctions and metal contact contacts |
| | | *tᵢ >* 1 *-* 10*ms* | |

Thus, the claimed invention proposes to use an active method of parametric location.

***Parametric is a method in which the search object (UAV) is irradiated with an additional exciting field (acoustic, electromagnetic, laser, etc.), which changes its physical properties, while receiving a reflected signal from the search object, changes in the parameters of the probing field are recorded.***

The excited elements of the search for unmanned aerial vehicles (UAVs) includes point pressure metal contacts (Table 2), due to their nonlinear electrical properties.

One of the characteristic examples of effects in modern electronics and electrical engineering - the breakdown of thin dielectric films - is traditionally interpreted as "harmful". However, in the proposed invention the possibility of its deliberate induction is considered, which can be used to enhance the unmasking features of small-sized objects, thereby turning this effect into a functionally "useful" one.

The proposed version of the method is based on enhancing the nonlinear properties of flat metal contacts by additionally exposing them to powerful microwave short radio pulses. This effect causes, under certain conditions, an electric plasma breakdown of dielectric oxide films covering the contacting metal surfaces. The breakdown consists of several elementary fast-acting nonlinear electronic processes: electron emission from the cathode into the dielectric (oxide film), electron multiplication due to impact ionization, and the formation and destruction of a negative space charge. At the moment of breakdown, the nonlinear properties of the contacts are sharply enhanced, which can be recorded by the NRS receiver. The enhancement of nonlinear properties can be explained by the emergence of a nonlinear plasma layer.

The effect of breakdown of thin dielectric films is considered in modern electronics and electrical engineering [9, 10] as "harmful". However, in our case, its special creation allows us to enhance the unmasking properties of small-sized search objects, i.e., makes the effect "useful".

It has been experimentally established that for small-sized objects with point pressure contacts (explosive device designs - drone target load), the disappearance of nonlinear properties is observed at a primary microwave field flux density of more than 10-30 W/m². This can be explained by the "burning" of point contacts - due to the high concentration of microwave power in them. For small-sized objects with flat contacts, the "burning" effect was not observed. In most cases, the reflected signal at the combination frequency increased with the growth of the exciting microwave field.

It should be noted that experimental studies fully confirm the correctness of the conclusions about the advisability of using the effect of plasma breakdown of the oxide film of flat metal-to-metal contacts to detect small-sized objects, in particular, UAVs.

Thus, the detection of an aerial target in the form of a **self-controlled unmanned aerial vehicle** in the claimed invention is proposed to be carried out using the method of multi-frequency nonlinear radar,
including the recording of the reflected signal at combination frequencies of the second and third order, caused, respectively, by the quadratic term of the current-voltage characteristic of the semiconductor junction and the "cubic" nonlinearity of the current-voltage characteristic of the oxidized metal contact,

In this case, the search object (UAV) is irradiated with an additional exciting field (acoustic, electromagnetic, laser, etc.), which changes its physical properties, thereby increasing the contrast between the search object and the surrounding background, which increases the detection range of the object and the accuracy of its recognition.

Confident detection of an air target is also ensured by simultaneously emitting two or more probing frequencies, reconfiguring them in the required frequency range, while recording the frequency of the reflected signal at the moment of its maximum value.

Scanning the spectrum by retuning carrier frequencies allows us to fix the optimal frequency for determining the "vulnerable spot" of an air target.

Having determined the optimal frequency, the UAV is exposed to a powerful electromagnetic pulse at this optimal frequency in order to disrupt the functioning of its internal systems and neutralization.

### Implementation of the invention

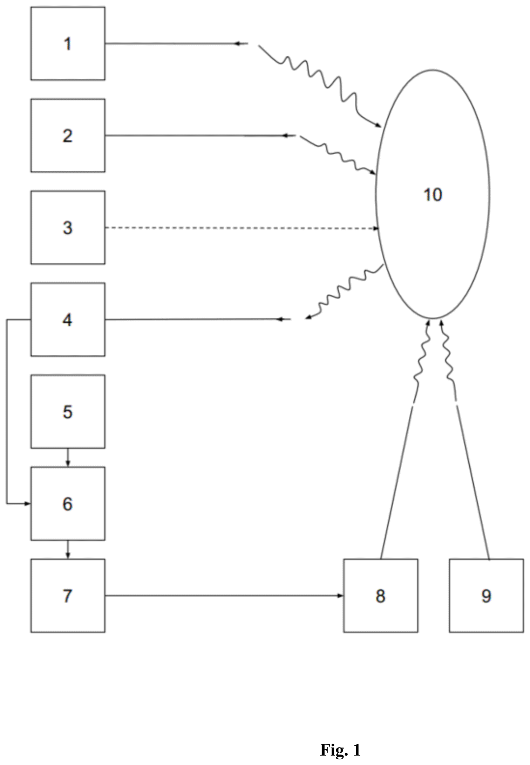

Fig. 1 shows a block diagram of a device implementing the proposed method. The device comprises: a microwave generator (1) operating at frequency f1; a microwave generator (2) operating at frequency f2; a source of a parametric excitation signal (3); a wideband spectrum receiver-analyzer (4); a memory unit for signatures (characteristic spectra) of search objects (5); a spectrum comparison device (6); a decision-making device (7); a variable frequency generator - VFG (8); a pulse microwave generator (9);

The diagram (FIG. 1) shows, for clarity, a search object (10) that is not included in the device.

The device operates as follows: narrow-band microwave probing radar signals at frequencies f1 and f2 from generators 1 and 2 cause the appearance of combination frequencies of the second and third orders in the spectrum of the reflected signal. Their reception and analysis is carried out by a wide-band receiver - spectrum analyzer 4. The spectrum comparison device 6 compares the spectrum of the received signal (signals) with the signal signatures contained in the memory block 5. If the spectra coincide, a control signal is sent from the output of device 6 to the decision-making block 7.

The effect of the parametric exciting field from the source 3 on the search object 10 causes an additional characteristic "coloring" of the spectrum of the reflected signal. This increases the contrast between the search object and the surrounding background, which increases the detection range of the object and the accuracy of its recognition.

At the same time, the UAV is exposed to powerful microwave short radio pulses from generator 9, causing a deliberate electrical plasma breakdown of the dielectric oxide films covering the contacting metal surfaces to enhance the unmasking signs of detection of the search object.

The control signal from the output of the decision-making unit 7, containing information about the optimal frequency of action on the UAV, is sent to the variable frequency generator 8, which, at the identified optimal frequency, emits a powerful electromagnetic pulse that neutralizes the UAV, including those ***without external control.***

### References:

1. Shteynshleger V.B., On the theory of scattering of electromagnetic waves by a vibrator with a nonlinear contact/Radio Engineering and Electronics No. 7, 1978.
2. Shteynshleger V.B., Misechinikikov G.S. Study of the effect of nonlinear scattering of radio waves by metal objects//Radio Engineering and Electronics No. 6, 1994.
3. Bond K.D. et al. Mutual modulation during tunneling of electrons through aluminum-aluminum oxide films. TIIER, No. 12, 1979.
4. Knyazev A.D. Elements of the theory and practice of ensuring electromagnetic compatibility of radio-electronic equipment. Moscow, "Radio and Communications", 1988.
5. Pavlov A.V. Optical-electronic devices. Moscow, "Energy", 1974.
6. Vorobiev V.I. Optical location for radio engineers. M., "Radio and communication", 1983.
7. Myrova L.O., Chepizhenko A.Z. Ensuring the resistance of communication equipment to ionizing and electromagnetic radiation. Moscow, "Radio and Communications", 1984.
8. Gludkin O.P., Chernyaev V.N. Technology of testing microelements of radio-electronic equipment and integrated microcircuits. Moscow, "Energia", 1980.
9. Electro-radio materials. Edited by Tareev B.M. M., "Higher School", 1978.
10. Vorobyov A.A., Vorobyov G.A. Electrical breakdown and destruction of solid dielectrics. Moscow, "Higher School", 1966.

## Claims

1. A method of interacting with, in particular detecting, low-altitude unmanned aerial vehicles, hereinafter named UAVs, including those without external control, the method using multi-frequency nonlinear radar, including receiving and recording a reflected signal at combination frequencies, the multi-frequency non-linear radar forms a probing field, **characterized in that** the UAV is simultaneously exposed to an additional parametric exciting field, which changes the UAV's physical properties, such electromagnetic properties, acoustic properties, nonlinear properties, etc., while changes in the received probing field are recorded.

2. The method according to claim 1, **characterized in that** a characteristic burst of the received signal is recorded at the second-order combination frequency, excited by the parametric field, caused by the quadratic term of the volt-ampere characteristic of the semiconductor junction on the UAV.

3. The method according to claim 1, **characterized in that** a characteristic burst of the received signal is recorded at the third-order combination frequency, excited by the parametric field, caused by the "cubic" nonlinearity of the volt-ampere characteristic of contacting oxidized metal surfaces on the UAV.

4. The method according to claim 1, **characterized in that**, an additional impact on the UAV with powerful short microwave radio pulses is applied, yielding an intended electrical plasma breakdown of its dielectric oxide films covering the contacting metal surfaces, thereby enhancing unmasking signs of detection of the UAV.

5. The method according to claim 1, **characterized in that** two probing microwave signals with different frequencies are simultaneously emitted, tuning them in an associated frequency range of the UAV, while recording the frequency of the reflected signal at the moment of its maximum value, thereby determining the optimal frequency for neutralizing the UAV, after which the UAV is exposed by a powerful electromagnetic pulse at the optimal frequency in order to disrupt the functioning of its internal systems.

6. A device comprising: a microwave generator (1) operating at a frequency f1; a microwave generator (2) operating at a frequency f2; a source of a parametric excitation signal (3); a wideband spectrum receiver-analyzer (4); a memory unit for signatures i.e. characteristic spectra of a search object (5); a spectrum comparison device (6); a decision-making device (7); a variable frequency generator - VFG (8); a pulse generator (9).

7. A system for detecting a low-altitude aerial object, comprising a generator (1 and 2) for transmitting multi-frequency microwave signals towards the object, a receiver (4) for receiving and performing wideband spectral analysis of signals caused by reflection by the object of the transmitted microwave signals, the spectral analysis including analysis of harmonics of the transmitted signals, and a memory unit (5) for recording spectra of objects, **characterized by** a parametric signal generator (3) for directing an acoustic or electromagnetic excitation signal at the object to modify a physical property of the object and thereby modify the spectrum of the reflected microwave signals and a spectrum comparison device for comparing the modified spectrum of the reflected with signals with spectra stored in the memory.

8. A system as claimed in claim 7, further comprising a pulse generator for directing a pulse of high energy at the object to disrupt the functioning of internal systems of the object.
